(19) Europäisches Patentamt
European Patent Office
Office européen des brevets

(11) **EP 4 660 885 A1**

(12) **EUROPEAN PATENT APPLICATION**

(43) Date of publication:
**10.12.2025   Bulletin 2025/50**

(21) Application number: **24180429.3**

(22) Date of filing: **06.06.2024**

(51) International Patent Classification (IPC):
**G06N 3/08** (2023.01)          **G06N 20/00** (2019.01)
**G06V 10/82** (2022.01)

(52) Cooperative Patent Classification (CPC):
**G06V 10/82; G06N 3/08; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
• **Nicolae, Maria Irina
  70197 Stuttgart (DE)**
• **Ring, Martin
  72290 Lossburg (DE)**
• **Mundhenk, Philipp
  74321 Bietigheim-Bissingen (DE)**

(54) **ARRANGEMENT AND METHOD FOR PROCESSING DATA BY MEANS OF A MACHINE LEARNING MODEL**

(57)    According to various embodiments, a method for processing data by means of a machine learning model is described, comprising receiving input data for the machine learning model, generating multiple input variants from the input data by differently pre-processing the input data in multiple different ways by one or more predetermined pre-processing methods, obtaining, for each input variant, at least one respective output variant by supplying the input variant to the machine learning model and determining output data from the obtained output variants.

**Fig. 3**

EP 4 660 885 A1

**Description**

The present disclosure relates to devices and methods for processing data by means of a machine learning model.

Foundation models promise a new digital revolution, but their usage is seen with critical eyes by many companies. First instances of corporate usage show that the risk of leaking critical information is a credible threat.

The risk of data leaking arises from the fact that providers of foundation models such as large language models (LLMs) like ChatGPT, BERT, or visual transformers, such as ViT typically retrain their models on the inputs and feedback given by the users. However, especially in a corporate setting, the data collection and subsequent usage of the collected data by foundation models is undesirable since companies usually have strong interest in preserving their intellectual property to retain a competitive advantage. For this reason, having external foundation models trained on their private knowledge or information is usually an unwanted option although it would save local computational resources and training effort.

Accordingly, approaches to improve data privacy for foundation models are desirable, i.e. approaches which alleviate privacy violations and loss of intellectual property when using externally-deployed foundation models for data processing.

According to various embodiments, a method for processing data by means of a machine learning model is provided, comprising receiving input data for the machine learning model, generating multiple input variants from the input data by differently pre-processing the input data in multiple different ways by one or more predetermined pre-processing methods, obtaining, for each input variant, at least one respective output variant by supplying the input variant to the machine learning model and determining output data from the obtained output variants.

The method described above provides automatic data protection to users of machine learning models (in particular foundation models) which are provided as a service. It may be performed automatically and/or locally (e.g. on-premises in a gateway or proxy device connecting a local network with an external network where the machine learning model is hosted), offering users full control and transparency.

In the following, various examples are given.

Example 1 is the method for processing data by means of a machine learning model described above.

Example 2 is the method of example 1, comprising performing the generating of the multiple input variants on one or more first computers (e.g. in a first network), transmitting the generated input variants to one or more second computers (e.g. in a second network) running the machine learning model other than the one or more first computers, (generating of the output variants on the one or more second computers and transmitting them to the one or more first computers), receiving the output variants from the one or more second computers at the one or more first computers and determining the output data by the one or more first computers.

In other words, the pre-processing and the post-processing (i.e. the determination of the output data from the output variants) are performed on one or more devices other than the one or more devices running the machine learning model (multiple devices are possible in each case if distributed processing is used). Thus, the pre-processing and the post-processing is kept secret from the provider of the service of processing by the machine learning model and this service provider only gets little information on the input data and the output data.

Example 3 is the method of example 1 or 2, comprising generating multiple different output variants for each input variant by supplying the input variant to the machine learning model multiple times.

So, according to one embodiment, the machine learning model is one which has stochasticity (i.e. randomness) and use of this is made to generate multiple different output variants per input variant. This further hides what the user (which provides the input data) wants to achieve with the processing.

Example 4 is the method of any one of examples 1 to 3, wherein the input data is program code, the output data is program code, the pre-processing comprises one or more of splitting the code into code segments and name changes (variables, functions, methods, classes, constants etc.) and the determining of the output data comprises re-merging processed code segments (inversely to the splitting) and taking back the name changes.

For processing of code, this is a way to generate multiple variants of the input for the machine learning model which may be implemented efficiently and which may be easily reversed (e.g. the output data may be easily generated from the output variants).

Example 5 is the method of any one of examples 1 to 3, wherein the input data is image data and the pre-processing comprises one or more of splitting images into image parts and/or image augmentation.

This is a way to generate multiple input variants for image data efficiently.

Example 6 is the method of example 5, wherein the output data is image data and the determining of the output data comprises re-merging processed image parts and/or de-augmentation (e.g. de-noising etc.) of the processed image parts.

In case of the output also being images, the pre-processing can be easily reversed. The output can also be data other than images, e.g. segmentation or object detection results. In that case, for example, the output versions may be simply aggregated and/or the best results (e.g. where the ML model is most confident) are taken (e.g. per processed image part)).

Example 7 is the method of any one of examples 1 to 6, wherein determining the output data comprises selecting one or more of the output variants according to a selection criterion and generating the output data from the selected output variants.

For example, the best result (output variant) may be selected as output data (e.g. which gives the best code optimization or the best image quality). Alternatively, the output variant which the machine learning model has generated from the (original) input data (which was used as one of the input versions) is selected. It is also possible to select multiple output variants and merging the output data from the selected output variants (or, equivalently, merging different sets of output variants and selecting the output data from the results of merging the different sets). The multiple output variants which are selected are for example output variants generated from the same input variant.

Example 8 is the method of any one of examples 1 to 7, further comprising controlling a robot device using the output data.

For example, the input data may comprise sensor data about an environment of a robot device or a state of the robot device (such as camera images obtained in a vehicle) which is processed in a processing pipeline comprising processing by the ML model and generating control signals (e.g. the ML model comprises object detection whose results are used for trajectory planning).

Example 9 is a computer arrangement comprising one or more computers and configured to perform a method of any one of examples 1 to 7.

Example 10 is a computer program comprising instructions which, when executed by one or more computers, makes the one or more computers perform a method according to any one of examples 1 to 7.

Example 11 is a computer-readable medium comprising instructions which, when executed by one or more computers, makes the one or more computers perform a method according to any one of examples 1 to 7.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1    illustrates usage of a machine learning (ML) model 101 in a computer arrangement 100.

Figure 2    illustrates usage of a foundation model 201 according to an embodiment.

Figure 3    shows a flow diagram 300 illustrating a method for processing (e.g. sensor) data by means of a machine learning model.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

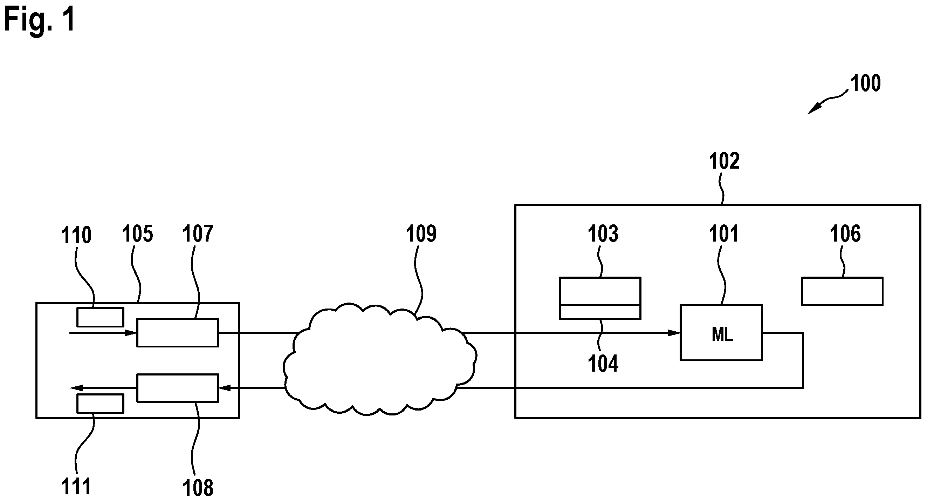

Figure 1 illustrates usage of a machine learning (ML) model 101 in a computer arrangement 100.

The ML model 101 is running on a computer 102 and receives an input 103 to be processed as well as a task description 104 (e.g. provided by a user), which the computer 102 for example receives from a client computer 105 via a communication network 109 (but which may also be input to the computer 102 by other means). The input 103 and the task description 104 may be supplied together to the ML model 101, e.g. in a text prompt.

The ML model 101 generates an output 106 from the input 103 in accordance with the task description 105, which the computer 102 for example transmits back to the client computer 105. For example, the client computer 105 is a control system (e.g. in a factory) which partially outsources data processing by making use of (remotely hosted) ML model 101.

The input 103 may be or include image data (i.e. one or more images), text (in particular code), any kind of sensor data (e.g. a radar or LiDAR point cloud) etc.

The machine learning (ML) model 101 is for example a foundation model. A foundation model is a machine learning model, usually a neural network that was trained on large amounts of data to perform a generic task on one or more data modalities (e.g., images, text, video etc.). These ML models are often trained on public data using a self-supervised learning paradigm. Examples of foundation models are large language models (LLMs) like ChatGPT, BERT, or visual transformers, such as ViT.

By default, it is reasonable to assume that foundation models providers, such as OpenAI, Microsoft, and Aleph Alpha, log all data and user interactions that their ML models receive as input. For the providers, this is a cheap and easy way to improve their models over time based on user information and interactions. Most recently, users are provided with the choice to opt out of data collection by some model providers. However, the model host still receives all the user data, and the use of this option relies heavily on trust. For both corporate and private use, the risk of leaking proprietary, private or personal information simply by using foundation models is a valid threat.

In view of the above, according to various embodiments, approaches are provided which allow interaction and usage of foundation models, in particular with external hosting (i. e., not on-premises, such as in the example of figure 1 where the ML model 101 is hosted on a computer 102 remote from the client computer 105), while preserving user and data privacy.

According to various embodiments, a system and a method for reducing the capabilities of the service providers by limiting the utility of the user input and the amount of feedback for outputs are provided. This is achieved by applying pre-processing (e.g. data augmentation and/or other pre-processing) on input data 110 to generate multiple variants (or versions) of the input 103 of the ML model 101, as well as post-processing (of the various variants (or versions) of the output 106 which the ML model 101 generates from the different variants of the input 103 generated by different augmentations and/or pre-processings) to generate output data 111. The post-processing for example includes denoising, aggregation and/or selecting one of the output variants 106)

According to various embodiments, the pre-processing of the input data 110 and the post-processing of the output 106 is performed on the client computer 105 by a pre-processing module 107 and a post-processing module 108, respectively, i.e. on a local machine or ("on-premises" device), thus limiting the amount of information that the service provider of the foundation model receives.

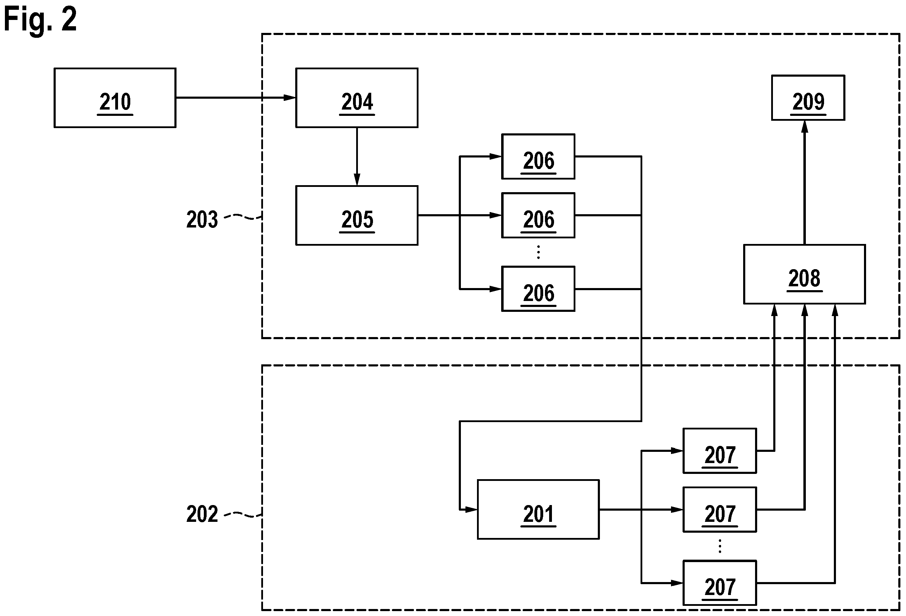

Figure 2 illustrates usage of a foundation model 201 according to an embodiment.

The foundation model 201 is hosted on a host device (or possibly a system of multiple computing devices) 202, e.g. corresponding to the computer 102.

As in the example of figure 1, the foundation model 201 is used (remotely) by a client device 203 (e.g. corresponding to the client computer 105)

The client device 203 acquires input data 204 (e.g. generated locally, e.g. from sensor data along with a task description which may both be provided by a user, possibly from another (i.e. a third) device (user device) 210 which uses the client device 203 as a gateway or proxy to the host device 202) and (automatically) applies pre-processing (e.g. augmentation) 205 to the input data 204 to generate M different input variants 206 from the input data 204.

For example, the input data 204 includes the code of a C program and the task description 205 a description of the task (e.g. in form of a text prompt) to optimize it in terms of maintainability. The client device 203 may apply various pre-processing techniques depending on the type of the input data 204 and the task the user wants to solve (i.e. the task described in the task description 205), for example

- For an image in the input data 204, standard image data augmentation techniques like different types of random noise (Gaussian, uniform, etc.), effects altering the style of the image (e.g., snow, motion blur, convert to painting), rotation, etc.
- For the case of one or more images and/or code in the input data 204, depending on the task to solve, the input data 204 can be split into multiple parts (e.g. image parts, code segments) that could each be used as one input variant 206 and thus constitute a separate input for the foundation model 201 (i.e. each input variant 206 is a respective cropping of a respective image). Program code can be cut into multiple parts randomly or into natural units (e.g., functions and classes) to generate the multiple variants 206 that are optimized by the foundation model 201 independently. Images can be cut into smaller patches, with or without overlap, to generate the multiple input variants 206.
- Obfuscation techniques can be applied to code in the input data 204, without changing its functionality, e.g., the variable names (or other identifiers like of functions, methods, classes, constants etc.) can be randomized.
- For natural language in the input data 204, some words can be replaced with others using different strategies (e.g., random, synonyms).

The client device 203 then forwards (supplies) the M input variants 206 to the host device 202 (i.e. to the service provider). There, they are fed to the foundation model 201 which returns an output for each input variant 206. Optionally, each of the M inputs can be run through the model N times, e.g. with a positive temperature setting ($T > 0$): most foundation models have a temperature parameter that allows controlling (and making use of) stochasticity of the ML model and thus the model outputs. Thus, running the same input through the foundation model 201 N times in this manner results in N different answers to the same query, i.e. (considering that there are N input variants 206), in $M \times N$ output variants 207. Advantage of model stochasticity may be taken in order to improve the chances of obtaining a valid answer from the foundation model 201 and to obtain privacy for the user regarding which output variant 207 is chosen as best.

The host device 201 returns the $M \times N$ output variants 207 ($M \geq 2$, $N \geq 1$) to the client device 201 (i.e. to the user side). For the case where $T = 0$ and no stochastic outputs are available, $N = 1$.

The client device 203 performs post-processing 208 of the output variants 207 to generate output data 209.

The post-processing 207 depends on the pre-processing 205, it may for example be inverse to the pre-processing 205 (if applicable). For example, if the input variants 206 were generated by splitting the input data 204 (i.e. into code segments or image portions) the post-processing 207 may aggregate the output variants 207 accordingly (e.g. recombine processed code segments or processed image portions). In the example of code where the pre-processing 205 includes changing the names variables, the post-processing 207 includes changing back the variable names. Output variants 207 resulting from noisy inputs are for example reduced to the output data 209 by best-fit selection and/or aggregation (e.g., denoising, averaging, pooling), depending on the data modality and task to be solved. The final output data 209 is provided to the user as answer to their query (e.g. to the user device 210).

In the following, two exemplary embodiments wherein the input data 204 is code and image data, respectively, are described.

For the case of the input data 204 being code and the task being, as an example, to simplify the code, the code is, as pre-processing 205, split into smaller subsections, e.g., snippets containing only parts of functions. Further, to make the tracking for the foundation model provider harder, part of the used variable names are changed and saved as part of the pre-processing 205, e.g.,

$$acc\_req = driv\_req \wedge c$$

becomes

$$a = b \wedge c$$

Track of these changes is kept across the code base (i.e. input data). Additionally, obfuscation techniques can be applied as part of the pre-processing 205, e.g., a one line instruction is split up into multiple computational steps.

The pre-processing is applied multiple times in different manner to the input data 204 to generate the M different input variants 206.

The foundation model 201 is applied to the input variants 206 (e.g. the different variants of the input code to be processed) using a temperature (T > 0) to receive multiple feedbacks (i.e. multiple output variants 207 per input variant 206) to choose an optimal answer in the post-processing 207.

Specifically, in the post-processing 207, the M × N output variants 207 generated by the foundation model 201 are put together again (the variable names are changed back to their initial names pre-processing and the output variants 207 are merged according to the splitting into the input variants 206) and the results (which may still be more than one due to the temperature setting) are compared and evaluated, e.g., the result with the lowest cyclomatic complexity is chosen.

It should be noted that the post-processing 207 could also be done on a third (computer) device.

The following shows as example an original code segment (corresponding to the input data 204), the optimized original code segment (i.e. a first output data variant 207 generated by the foundation from the original input data as first input data variant 206), a pre-processed variant of the code segment (as a second input data variant 206) with changed variable names and code split in two segments, and the optimized code of the pre-processed variant (i.e., respectively a second output data variant 207 generated from the second input data variant).

Original code segment:

```
# Creates a list containing 3 lists, each of 2 items (token id and token weight), all set
# to 0   -> in Bag of Words, one list for each token, with two items a. token name, b.weight
w, h = 2, len(list_idX)
MatrixX = [[0 for x in range(w)] for y in range(h)]
for c in range(len(list_weigths_X)):
    MatrixX[c][0] = list_idX[c] #[(1,0)] = token id
    MatrixX[c][1] = list_weigths_X[c]    #[(1,1)] = token weight
print("MatrixX: ", MatrixX)




MatrixY = [[0 for x in range(w)] for y in range(h)]
for c in range(len(list_weigths_Y)):
    MatrixY[c][0] = list_idY[c] #[(1,0)] = token id
    MatrixY[c][1] = list_weigths_Y[c]    #[(1,1)] = token weight
print("MatrixY: ",MatrixY)



MatrixX= np.array(MatrixX)
MatrixX = MatrixX.reshape(-1, 1)
print("matrixX: ",MatrixX)

MatrixY= np.array(MatrixY)
MatrixY = MatrixY.reshape(-1, 1)
MatrixY= np.ravel(MatrixY,order='C')
print("matrixY: ",MatrixY)

clf1= svm.SVC(kernel='poly', degree=4, C=1.4) # built in function

clf1.fit(MatrixX, MatrixY) #* this is the training
print("Similarity score  = ", clf1.score(MatrixX,MatrixY)) #* this is the testing
```

Optimized original code segment:

```
import numpy as np
from sklearn import svm

# Initialize matrices directly with NumPy
MatrixX = np.zeros((len(list_idX), 2))
MatrixY = np.zeros((len(list_idY), 2))

# Assign values directly
MatrixX[:, 0] = list_idX
MatrixX[:, 1] = list_weigths_X
MatrixY[:, 0] = list_idY
MatrixY[:, 1] = list_weigths_Y

# Remove unnecessary reshaping and raveling
# MatrixX = MatrixX.reshape(-1, 1)  # Not needed
# MatrixY = MatrixY.reshape(-1, 1)  # Not needed
# MatrixY = np.ravel(MatrixY, order='C')  # Not needed

# Create and train the SVM classifier
clf1 = svm.SVC(kernel='poly', degree=4, C=1.4)
clf1.fit(MatrixX, MatrixY)

# Assess the similarity score
print("Similarity score  = ", clf1.score(MatrixX, MatrixY))
```

Pre-processed code segment:

```
# Creates a list containing 3 lists, each of 2 items (token id and token weight), all set to 0
# -> in Bag of Words, one list for each token, with two items a. token name, b.weight
w, h = 2, len(list_idX)
Matrix1 = [[0 for x in range(w)] for y in range(h)]
for c in range(len(list_weigths_X)):
    Matrix1[c][0] = list_idX[c] #[(1,0)] = token id
    Matrix1[c][1] = list_weigths_X[c]    #[(1,1)] = token weight
print("MatrixX: ", MatrixX)


Matrix2 = [[0 for x in range(w)] for y in range(h)]
for c in range(len(list_weigths_Y)):
    Matrix2[c][0] = list_idY[c] #[(1,0)] = token id
    Matrix2[c][1] = list_weigths_Y[c]    #[(1,1)] = token weight
print("MatrixY: ",MatrixY)


### Split


Matrix1= np.array(Matrix1)
Matrix1 = MatrixX.reshape(-1, 1)
print("matrixX: ",Matrix1)

Matrix2= np.array(MatrixY)
Matrix2 = Matrix2.reshape(-1, 1)
Matrix2= np.ravel(Matrix2,order='C')
print("matrixY: ",Matrix2)

clf1= svm.SVC(kernel='poly', degree=4, C=1.4) # built in function

clf1.fit(Matrix1, MatrixY) #* this is the training
print("Similarity score  = ", clf1.score(Matrix1,Matrix2)) #* this is the testing
```

Optimized pre-processed code segment:

```
# Create Matrix1
Matrix1 = [[list_idX[c], list_weigths_X[c]] for c in range(len(list_idX))]

# Create Matrix2
Matrix2 = [[list_idY[c], list_weigths_Y[c]] for c in range(len(list_idY))]

print("MatrixX: ", Matrix1)
print("MatrixY: ", Matrix2)


### Split

import numpy as np
from sklearn import svm

# Convert matrices to numpy arrays
Matrix1 = np.array(MatrixX).reshape(-1, 1)
Matrix2 = np.array(MatrixY).reshape(-1)

print("MatrixX: ", Matrix1)
print("MatrixY: ", Matrix2)

# Initialize and train the SVM classifier
clf1 = svm.SVC(kernel='poly', degree=4, C=1.4)
clf1.fit(Matrix1, Matrix2)

# Evaluate the classifier
score = clf1.score(Matrix1, Matrix2)
print("Similarity score = ", score)
```

The above examples illustrate that even in this simple application with splitting and changing of variable names and still coming to comparable results only minor optimizations are missed which can be found my increasing the amount of sent input data variants with different variable names and split parts.

In the case of the input data 204 being image data, i.e. includes one or more images, the user (of user device 210) provides one (or potentially more than one) image as input data 204. The image is forwarded to the client device 202 which automatically pre-processes and pre-processes it to create M input variants 206 of it, by applying pre-processing operations (e.g. augmentations) to it such as

- Different types of random noise (Gaussian, uniform, etc.)
- Corruptions (weather effects such as snow or rain, motion blur, overexposure, etc.),
- Style changes (convert to painting, sketch, use a specific artist style),
- Other standard image pre-processing: rotation, cropping, affine transformations, etc.,
- Noise introduced by adversarial attacks.
- Cutting the image or an augmented variant of it into smaller patches, with or without overlap.

The M variants of the image produced by the pre-processing are then forwarded to the service provider and fed to the remote foundation model 201 which returns M $\times$ N output variants 206, as explained above. The M $\times$ N output variants 206 are returned to the client device 203 (for the case where T = 0 and no stochastic outputs are available, N = 1). If the input image was split into patches to create the input variants 205 and the output variants 206 are also images (i.e. the foundation model 201 processes an image to another image), the output data 209 may be generated by fitting the patches (i.e. the output variants 206) into one. Output variants 206 resulting from noisy input variants 205 may be reduced to one through best-fit selection or aggregation (e.g., denoising, averaging, pooling). The output data 209 is provided to the user device 210.

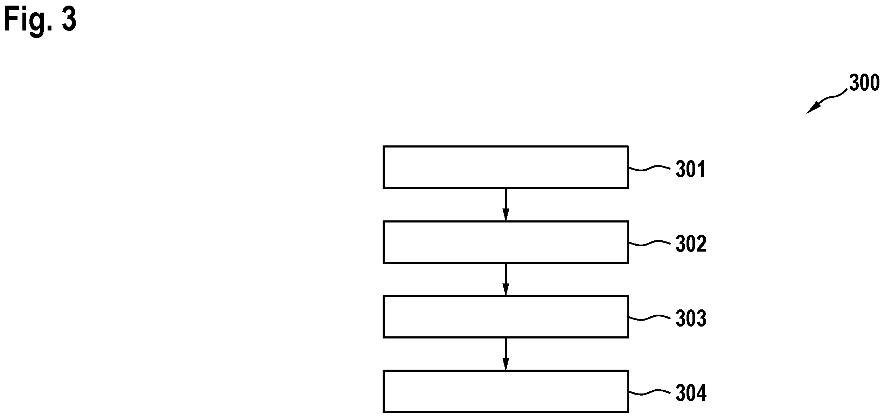

In summary, according to various embodiments, a method is provided as illustrated in figure 3.

Figure 3 shows a flow diagram 300 illustrating a method for processing (input, e.g. sensor) data by means of a machine learning model (e.g. a neural network).

The method is for example performed by a computer such as the client computer in the examples above. The machine learning model may in particular be a foundation model.

In 301, input data for the machine learning model is received (e.g. via an input interface of the computer, e.g. a network interface).

In 302, multiple input variants are (automatically) generated from the input data by differently pre-processing (e.g. augmenting) the input data in multiple different ways by one or more predetermined pre-processing methods (e.g. cropping to different image portions, augmenting differently by Gaussian noise, augmenting randomly, splitting the input data into multiple parts as input variant).

In 303, for each input variant, at least one respective output variant is obtained by (automatically) supplying the input variant to the machine learning model (possibly multiple times, e.g. using different parameter settings of the machine learning model). It should be noted that while the ML model may run on the host side this obtaining may be seen to be performed on the client side in the sense that it transmits the input variants to the host side and receives the output variants which are generated on the host side.

In 304, output data (for the input data, i.e. a processing result of the input data) is (automatically) determined from the obtained output variants (by selection and/or combination, e.g. by merging multiple ones of the obtained output variants and/or selecting one output variant (or possibly one of multiple merged output variants) according to selection criterion).

The output data can be further processed and for example be used to compute a control signal for controlling a technical system, like e.g. a computer-controlled machine, like a robot, a vehicle, a domestic appliance, a power tool, a manufacturing machine, a personal assistant or an access control system.

The input data may for example include sensor data from various sensors such as video, radar, LiDAR, ultrasonic, thermal imaging, motion, sonar, temperature, pressure, concentration etc.

The method of Figure 3 may be (automatically) performed by one or more data processing devices (i.e. computers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analogue circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

## Claims

1. A method for processing data by means of a machine learning model (101, 201), comprising:

   receiving (301) input data (110, 204) for the machine learning model (101, 201);
   generating (302) multiple input variants (206) from the input data (110, 204) by differently pre-processing (107, 205) the input data (110, 204) in multiple different ways by one or more predetermined pre-processing methods;
   obtaining (303), for each input variant (206), at least one respective output variant (207) by supplying the input variant (206) to the machine learning model (101, 201); and
   determining (304) output data (111, 209) from the obtained output variants (207).

2. The method of claim 1, comprising performing the generating of the multiple input variants (206) on one or more first computers (105, 203), transmitting the generated input variants (206) to one or more second computers (102, 202) running the machine learning model (101, 201) other than the one or more first computers (105, 203), receiving the output variants (207) from the one or more second computers (102, 202) at the one or more first computers (105, 203) and determining the output data (111, 209) by the one or more first computers (105, 203).

3. The method of claim 1 or 2, comprising generating multiple different output variants (207) for each input variant (206) by supplying the input variant (206) to the machine learning model (101, 201) multiple times.

4. The method of any one of claims 1 to 3, wherein the input data (110, 204) is program code, the output data (111, 209) is program code, the pre-processing (107, 205) comprises one or more of splitting the code into code segments and name changes and the determining of the output data (111, 209) comprises re-merging processed code segments and taking back the name changes.

5. The method of any one of claims 1 to 3, wherein the input data (110, 204) is image data and the pre-processing (107, 205) comprises one or more of splitting images into image parts and/or image augmentation.

6. The method of claim 5, wherein the output data (111, 209) is image data and the determining of the output data (111, 209) comprises re-merging processed image parts and/or de-augmentation of the processed image parts.

7. The method of any one of claims 1 to 6, wherein determining the output data (111, 209) comprises selecting one or more of the output variants (207) according to a selection criterion and generating the output data (111, 209) from the selected output variants (207).

8. The method of any one of claims 1 to 7, further comprising controlling a robot device using the output data (111, 209).

9. A computer arrangement comprising one or more computers and configured to perform a method of any one of claims 1 to 7.

10. A computer program comprising instructions which, when executed by one or more computers, makes the one or more computers perform a method according to any one of claims 1 to 7.

11. A computer-readable medium comprising instructions which, when executed by one or more computers, makes the one or more computers perform a method according to any one of claims 1 to 7.

# Fig. 1

Fig. 2

**Fig. 3**

EP 4 660 885 A1

Europäisches
Patentamt

European
Patent Office

Office européen
des brevets

## EUROPEAN SEARCH REPORT

**Application Number**

EP 24 18 0429

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHROYER ALEXANDER ET AL: "Data Augmentation for Code Analysis", 2022 INTERNATIONAL CONFERENCE ON INTELLIGENT DATA SCIENCE TECHNOLOGIES AND APPLICATIONS (IDSTA), IEEE, 5 September 2022 (2022-09-05), pages 156-163, XP034212228, DOI: 10.1109/IDSTA55301.2022.9923033 [retrieved on 2022-10-21] * Section III * * abstract * | 1-11 | INV. G06N3/08 G06N20/00 G06V10/82 |
| X | US 2023/259787 A1 (DAVID KURTIS EVAN [US]) 17 August 2023 (2023-08-17) * paragraphs [0096], [0115] * | 1,2,9-11 | |
| X | RISHI BOMMASANI ET AL: "On the Opportunities and Risks of Foundation Models", ARXIV.ORG, CORNELL UNIVERSITY LIBRARY, 201 OLIN LIBRARY CORNELL UNIVERSITY ITHACA, NY 14853, 16 August 2021 (2021-08-16), XP091033993, * page 111 * | 1,9-11 | **TECHNICAL FIELDS SEARCHED (IPC)** G06N G06V |
| X | OANA IGNAT ET AL: "Has It All Been Solved? Open NLP Research Questions Not Solved by Large Language Models", ARXIV.ORG, CORNELL UNIVERSITY LIBRARY, 201 OLIN LIBRARY CORNELL UNIVERSITY ITHACA, NY 14853, 15 March 2024 (2024-03-15), XP091701733, * Section 4.1 * | 1,9-11 | |

The present search report has been drawn up for all claims

| Place of search | Date of completion of the search | Examiner |
|---|---|---|
| Munich | 6 November 2024 | Frank, Mario |

EPO FORM 1503 03.82 (P04C01)

## ANNEX TO THE EUROPEAN SEARCH REPORT
## ON EUROPEAN PATENT APPLICATION NO.

EP 24 18 0429

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2024

| Patent document cited in search report | Publication date | Patent family member(s) | Publication date |
|---|---|---|---|
| US 2023259787 A1 | 17-08-2023 | US 2023259787 A1 | 17-08-2023 |
| | | US 2024185080 A1 | 06-06-2024 |

EPO FORM P0459

For more details about this annex : see Official Journal of the European Patent Office, No. 12/82